# EUROPEAN PATENT APPLICATION

(11) **EP 4 303 747 A1**
(43) Date of publication of application: **10.01.2024**
(21) Application number: 23182362.6
(22) Date of filing: 29.06.2023
(51) Int. Cl.: G06F 21/60, G06Q 20/20

(54) **PRINTING DEVICE, INFORMATION PROCESSING DEVICE, INFORMATION PROCESSING SYSTEM, PROCESSING METHOD, AND NON-TRANSITORY COMPUTER-READABLE STORAGE MEDIUM STORING A PROGRAM**

(30) Priority: 04.07.2022 JP 2022107687
(71) Applicant: Seiko Epson Corporation, Tokyo 160-8801 (JP)
(72) Inventor: YOSHIZAWA, Junichi, Suwa-shi, 392-8502 (JP); UMETSU, Jun, Suwa-shi, 392-8502 (JP); HEINRICHS, Mark, Hemel Hempstead, HP3 9TD (GB)
(74) Representative: Lewis Silkin LLP

(57) **Abstract**

A printing device includes an output information acquisitor that acquires output information for outputting information related to a settlement, an identification information generator that generates identification information including output identification information for identifying the output information, an identification information supplier that supplies the identification information to an information processing device that generates first identification information based on the output identification information and generates image information indicating a feature image representing the first identification information when the identification information is supplied, an image information acquisitor that acquires the image information from the information processing device, and an image output unit that outputs the feature image based on the image information so that a terminal device that captures the feature image and generates information including second identification information based on a result of the captured feature image is configured to capture the feature image, where the terminal device supplies the second identification information to a server device that makes the settlement when the second identification information is supplied and when the first identification information and the second identification information match.

## Description

The present application is based on, and claims priority from JP Application Serial Number 2022-107687, filed July 4, 2022, the disclosure of which is hereby incorporated by reference herein in its entirety.

### BACKGROUND

### 1. Technical Field

The present disclosure relates to a printing device, an information processing device, an information processing system, a processing method, and a non-transitory computer-readable storage medium storing a program.

### 2. Related Art

In recent years, techniques related to a settlement have become widespread. For example, JP-A-2021-026782 discloses a so-called barcode settlement that achieves a payment from the user to the store by reading an image such as a barcode installed in the store using the user's terminal device. Specifically, in the technique disclosed in JP-A-2021-026782, first, a barcode representing store identification information for identifying a store is read by a terminal device of the user. Second, the user inputs the settlement money amount into the terminal device of the user. Third, the user and the store clerk confirm the settlement money amount input by the user into the terminal device of the user. Fourth, the terminal device of the user transmits the store identification information and the money amount information indicating the settlement money amount to a settlement server. Fifth, the settlement server performs a settlement process in which the money indicated by the money amount information is paid to the store indicated by the store identification information.

In the technology in the related art, a settlement is performed using fixed information represented by a barcode installed in the store in advance before the user purchases the product at the store. In this case, there is a possibility of falsification of fixed information used for the settlement, such as replacing a barcode corresponding to one store with a barcode corresponding to another store. Therefore, in the technology in the related art, there is a possibility that the inappropriate settlements may be made due to falsification of fixed information used for a settlement.

### SUMMARY

According to an aspect of the present disclosure, in a non-transitory computer-readable storage medium storing a program, the program causes a processor of a printing device to function as an output information acquisitor that acquires output information for outputting information related to a settlement, an identification information generator that generates identification information including output identification information for identifying the output information, an identification information supplier that supplies the identification information to an information processing device that generates first identification information based on the output identification information and generates image information indicating a feature image representing the first identification information when the identification information is supplied, an image information acquisitor that acquires the image information from the information processing device, and an image output unit that outputs the feature image based on the image information so that a terminal device that captures the feature image and generates information including second identification information based on a result of the captured feature image is configured to capture the feature image, where the terminal device supplies the second identification information to a server device that makes the settlement when the second identification information is supplied and when the first identification information and the second identification information match.

According to another aspect of the present disclosure, in a non-transitory computer-readable storage medium storing a program, the program causes a processor of a printing device to function as an output information acquisitor that acquires output information for outputting information related to a settlement, an identification information generator that generates identification information including output identification information for identifying the output information, device identification information for identifying the printing device, and the output information, an identification information supplier that supplies the identification information to an information processing device that generates first identification information based on the output identification information and the device identification information, generates money amount information indicating a settlement amount related to the settlement based on the output information, and generates image information indicating a feature image representing the first identification information when the identification information is supplied, an image information acquisitor that acquires the image information from the information processing device, and an image output unit that outputs the feature image based on the image information so that a terminal device that captures the feature image and generates information including second identification information based on a result of the capture feature image is configured to capture the feature image, where the terminal device supplies the second identification information to a server device that makes the settlement based on the money amount information when the first identification information, the money amount information, and the second identification information are supplied and when the first identification information and the second identification information match.

According to another aspect of the present disclosure, in a non-transitory computer-readable storage medium storing a program, the program causing a processor of an information processing device to function as an identification information acquisitor that acquires the identification information from a printing device that acquires output information for outputting information related to a settlement, where the printing device generates identification information including output identification information for identifying the output information, an image information generator that generates first identification information based on the output identification information and generates image information indicating a feature image representing the first identification information, an image information supplier that supplies the image information to the printing device, and an identification information supplier that supplies the first identification information to a server device that makes the settlement when the second identification information is supplied from a terminal device that captures the feature image output by the printing device based on the image information and generates information including second identification information based on a result of the captured feature image and when the first identification information and the second identification information match.

According to still another aspect of the present disclosure, a printing device includes an output information acquisitor that acquires output information for outputting information related to a settlement, an identification information generator that generates identification information including output identification information for identifying the output information, an identification information supplier that supplies the identification information to an information processing device that generates first identification information based on the output identification information and generates image information indicating a feature image representing the first identification information when the identification information is supplied, an image information acquisitor that acquires the image information from the information processing device, and an image output unit that outputs the feature image based on the image information so that a terminal device that captures the feature image and generates information including second identification information based on a result of the captured feature image is configured to capture the feature image, where the terminal device supplies the second identification information to a server device that makes the settlement when the second identification information is supplied and when the first identification information and the second identification information match.

According to still another aspect of the present disclosure, an information processing device includes an identification information acquisitor that acquires the identification information from a printing device that acquires output information for outputting information related to a settlement, where the printing device generates identification information including output identification information for identifying the output information, an image information generator that generates first identification information based on the output identification information and generates image information indicating a feature image representing the first identification information, an image information supplier that supplies the image information to the printing device, and an identification information supplier that supplies the first identification information to a server device that makes the settlement when the second identification information is supplied from a terminal device that captures the feature image output by the printing device based on the image information and generates information including second identification information based on a result of the captured feature image and when the first identification information and the second identification information match.

According to still another aspect of the present disclosure, a processing method includes acquiring output information for outputting information related to a settlement, generating identification information including output identification information for identifying the output information, supplying the identification information to an information processing device that generates first identification information based on the output identification information and generates image information indicating a feature image representing the first identification information when the identification information is supplied, acquiring the image information from the information processing device, and outputting the feature image based on the image information so that a terminal device that captures the feature image and generates information including second identification information based on a result of the captured feature image is configured to capture the feature image, where the terminal device supplies the second identification information to a server device that makes the settlement when the second identification information is supplied and when the first identification information and the second identification information match.

According to still another aspect of the present disclosure, a processing method includes acquiring the identification information from a printing device that acquires output information for outputting information related to a settlement, where the printing device generates identification information including output identification information for identifying the output information, generating first identification information based on the output identification information and generating image information indicating a feature image representing the first identification information, supplying the image information to the printing device, and supplying the first identification information to a server device that makes the settlement when the second identification information is supplied from a terminal device that captures the feature image output by the printing device based on the image information and generates information including second identification information based on a result of the captured feature image and when the first identification information and the second identification information match.

According to still another aspect of the present disclosure, an information processing system includes a printing device and an information processing device, wherein the printing device includes an output information acquisitor that acquires output information for outputting information related to a settlement, an identification information generator that generates identification information including output identification information for identifying the output information, an identification information supplier that supplies the identification information to the information processing device, and an image output unit that outputs a feature image representing the image information based on image information supplied from the information processing device, and wherein the information processing device includes an identification information acquisitor that acquires the identification information from the printing device, an image information generator that generates first identification information based on the output identification information and generates image information indicating a feature image representing the first identification information, an image information supplier that supplies the image information to the printing device, and an identification information supplier that supplies the first identification information to a server device that makes the settlement when the second identification information is supplied from a terminal device that captures the feature image output by the printing device based on the image information and generates information including second identification information based on a result of the captured feature image and when the first identification information and the second identification information match.

### BRIEF DESCRIPTION OF THE DRAWINGS

FIG. 1 is a block diagram showing an example of the configuration of a settlement system Sys according to an embodiment of the present disclosure.
FIG. 2 is an explanatory diagram showing an example of information flow in the settlement system Sys.
FIG. 3 is a block diagram showing an example of the configuration of a POS terminal.
FIG. 4 is a block diagram showing an example of the configuration of a receipt printer.
FIG. 5 is a block diagram showing an example of the configuration of a mobile terminal.
FIG. 6 is a block diagram showing an example of the configuration of a receipt server.
FIG. 7 is a block diagram showing an example of the configuration of a settlement server.
FIG. 8 is a sequence chart showing an example of a settlement management process.
FIG. 9 is a sequence chart showing an example of a settlement management process.
FIG. 10 is a sequence chart showing an example of a settlement management process.
FIG. 11 is a sequence chart showing an example of a settlement management process.
FIG. 12 is a block diagram showing an example of a configuration of a settlement system Sys-B according to the first modification.
FIG. 13 is an explanatory diagram showing an example of information flow in the settlement system Sys-B according to the first modification.
FIG. 14 is a sequence chart showing an example of a settlement management process according to the first modification.
FIG. 15 is a sequence chart showing an example of a settlement management process according to the first modification.
FIG. 16 is a sequence chart showing an example of a settlement management process according to the first modification.

### DESCRIPTION OF EXEMPLARY EMBODIMENTS

Hereinafter, embodiments for implementing the present disclosure will be described with reference to the drawings. However, in each figure, the size and scale of each part are appropriately changed from the actual ones. In addition, since the embodiments described below are preferable specific examples of the present disclosure, there are various technically preferred limitations. However, the scope of the present disclosure is not limited to these embodiments unless otherwise specified in the following description.

### A. Embodiment

A settlement system Sys according to the present embodiment will be described.

### 1. Overview of settlement system

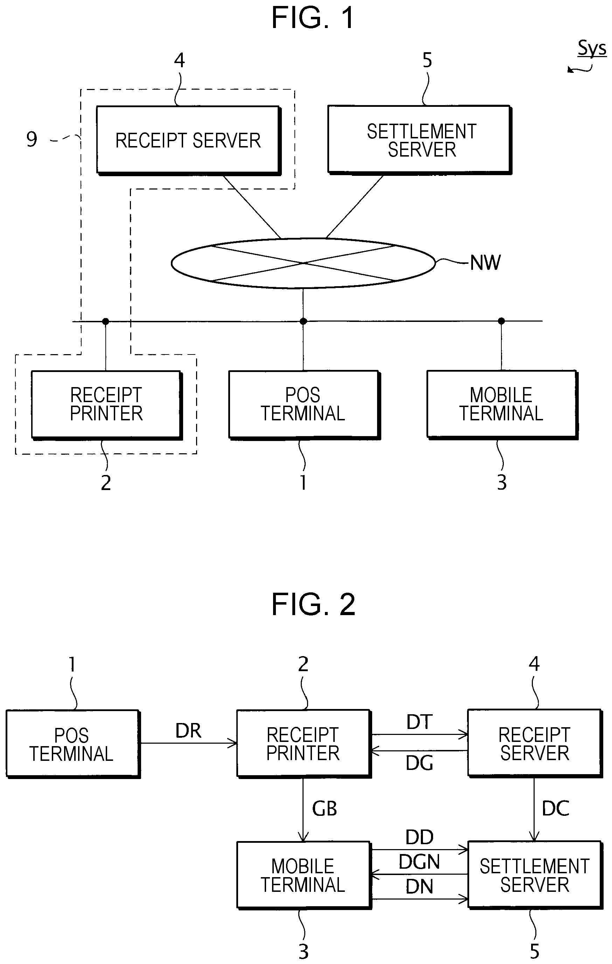

Hereinafter, an overview of the settlement system Sys according to the present embodiment will be described with reference to FIGs. 1 and 2.

FIG. 1 is a block diagram showing an example of the configuration of the settlement system Sys according to the present embodiment. FIG. 2 is a diagram showing an example of information transmitted and received inside the settlement system Sys.

In the present embodiment, a case where a customer U makes a settlement for the product when purchasing a product at a facility such as a store will be described as an example, but the present disclosure is not limited to such an aspect. The present disclosure may be applied to a case in which, when the customer U receives a service at a facility such as a service providing facility, the settlement of the price is made as consideration for receiving the service.

As illustrated in FIG. 1, the settlement system Sys includes a POS terminal 1, a receipt printer 2, a mobile terminal 3, a receipt server 4, and a settlement server 5. In the present embodiment, the receipt printer 2 is an example of a "printing device", the mobile terminal 3 is an example of a "terminal device", the receipt server 4 is an example of an "information processing device", and the settlement server 5 is an example of a "server device". Moreover, in the present embodiment, the receipt printer 2 and the receipt server 4 may be referred to as an "information processing system 9".

The POS terminal 1 acquires information about each product purchased by the customer U using an image reading device such as a barcode reader. Here, POS is an abbreviation for point of sales. Then, the POS terminal 1 generates product payment information DH based on information acquired using the image reading device. Here, the product payment information DH includes information about the quantity of each product purchased by the customer U and information about the unit price of each product purchased by the customer U.

Also, the POS terminal 1 generates transaction details output information DR based on one or both of the information acquired using the image reading device and the product payment information DH. Here, the transaction details output information DR is information that prints a receipt R representing a receipt image GR related to the price paid by the customer U as consideration for purchasing the product. It should be noted that the transaction details output information DR is an example of "output information".

As illustrated in FIG. 1, a POS terminal 1 can communicate with a receipt printer 2 via a wired network, a wireless network, or the like. As illustrated in FIG. 2, the POS terminal 1 transmits the transaction details output information DR generated by the POS terminal 1 to the receipt printer 2.

The receipt printer 2 outputs the receipt R representing the receipt image GR related to the transaction details related to the purchase of the product by the customer U based on the transaction details output information DR supplied from the POS terminal 1.

Also, the receipt printer 2 generates transaction identification information DT based on the transaction details output information DR supplied from the POS terminal 1. Here, the transaction identification information DT is information including the above-described transaction details output information DR, output identification information DSR, and printer identification information DSP. The transaction identification information DT is an example of "identification information".

The output identification information DSR is information for identifying each receipt R out of a plurality of receipts R output by the receipt printer 2. In other words, the output identification information DSR is information for identifying each transaction details output information DR out of the plurality of pieces of transaction details output information DR output by the receipt printer 2. For example, the output identification information DSR may be information indicating a count value that is incremented each time the receipt printer 2 outputs the receipt R. Further, for example, the output identification information DSR may be information indicating the date and time when the receipt printer 2 outputs the receipt R.

The printer identification information DSP is information for identifying the receipt printer 2. For example, the printer identification information DSP may be information indicating the production number of the receipt printer 2 uniquely assigned to the receipt printer 2. The printer identification information DSP is an example of "device identification information".

As illustrated in FIG. 1, the receipt printer 2 can communicate with the receipt server 4 via a wired network, a wireless network, or the like such as an Internet NW. As illustrated in FIG. 2, the receipt printer 2 transmits the transaction identification information DT generated by the receipt printer 2 to the receipt server 4.

The receipt server 4 generates barcode image information DG and server notification information DC based on the transaction identification information DT supplied from the receipt printer 2.

Barcode image information DG is information indicating a barcode image GB. The barcode image GB is an image representing settlement identification information DX and server access information DA. Note that the barcode image information DG is an example of "image information". Also, the barcode image GB is an example of a "feature image".

The settlement identification information DX is information generated based on the output identification information DSR described above, the printer identification information DSP described above, and store identification information DST. Here, the store identification information DST is information for identifying the store where the receipt printer 2 is installed. The receipt server 4 generates the store identification information DST based on the printer identification information DSP by referring to information about the relationship between the receipt printer 2 and the store where the receipt printer 2 is installed.

In the present embodiment, it is assumed that the receipt server 4 generates the settlement identification information DX by encrypting information including the output identification information DSR, the printer identification information DSP, and the store identification information DST with an encryption key or the like. In this case, the output identification information DSR, the printer identification information DSP, and the store identification information DST can be extracted from the settlement identification information DX by decrypting the settlement identification information DX with a decryption key or the like. However, the present disclosure is not limited to such an aspect. The receipt server 4 may generate the settlement identification information DX as information including the output identification information DSR, the printer identification information DSP, and the store identification information DST.

When a plurality of customers U purchase products at one or a plurality of stores and a plurality of settlements occur, the receipt server 4 generates a plurality of pieces of settlement identification information DX corresponding to the plurality of settlements on a one-to-one basis. Hereinafter, among the plurality of pieces of settlement identification information DX, generated by the receipt server 4, corresponding to the plurality of settlements by the plurality of customers U at one or more stores, a settlement identification information DX, generated by the receipt server 4, corresponding to the settlement made by one customer U is referred to as settlement identification information DX1. That is, the receipt server 4 generates the barcode image information DG indicating the barcode image GB for representing the settlement identification information DX1 corresponding to the settlement made by one customer U. The settlement identification information DX1 is an example of "first identification information".

The server access information DA is information for accessing the settlement server 5. Specifically, the server access information DA may be information indicating a URL of the settlement server 5. Here, the URL is an abbreviation for a Uniform Resource Locator.

The server notification information DC is information including the above-described settlement identification information DX and settlement money amount information DK. That is, the receipt server 4 generates the server notification information DC including the settlement identification information DX1 and the settlement money amount information DK corresponding to the settlement made by one customer U. Note that the server notification information DC is an example of "notification information".

The settlement money amount information DK is information indicating the settlement amount associated with the purchase of the product by the customer U. The receipt server 4 generates the settlement money amount information DK based on the transaction details output information DR. The settlement money amount information DK is an example of "money amount information".

As illustrated in FIG. 1, the receipt server 4 can communicate with the receipt printer 2 and the settlement server 5 via a wired network, a wireless network, or the like such as the Internet NW. As illustrated in FIG. 2, the receipt server 4 transmits the barcode image information DG generated by the receipt server 4 to the receipt printer 2. The receipt server 4 also transmits the server notification information DC generated by the receipt server 4 to the settlement server 5.

Based on the transaction details output information DR supplied from the POS terminal 1 and the barcode image information DG supplied from the receipt server 4, the receipt printer 2 prints the receipt R in which the receipt image GR indicated by the transaction details output information DR and the barcode image GB indicated by the barcode image information DG are displayed.

The mobile terminal 3 is a mobile terminal such as a smart phone owned by the customer U who made the settlement related to the barcode image information DG. The mobile terminal 3 acquires the barcode image information DG represented by the barcode image GB by capturing the barcode image GB displayed on the receipt R output from the receipt printer 2. Then, the mobile terminal 3 acquires the settlement identification information DX and the server access information DA included in the barcode image information DG.

Hereinafter, the settlement identification information DX acquired by the mobile terminal 3 when the mobile terminal 3 captures the barcode image GB indicated by the barcode image information DG generated by the receipt server 4 corresponding to the settlement made by one customer U is referred to as settlement identification information DX2. That is, in the present embodiment, the settlement identification information DX generated by the receipt server 4 corresponding to the settlement made by one customer U is referred to as the settlement identification information DX1, and the settlement identification information DX acquired by the mobile terminal 3 corresponding to the settlement made by one customer U is referred to as the settlement identification information DX2. The settlement identification information DX2 is an example of "second identification information".

As described above, the barcode image information DG generated by the receipt server 4 corresponding to the settlement made by one customer U indicates the barcode image GB for representing the settlement identification information DX1. Therefore, the settlement identification information DX1 and the settlement identification information DX2 match.

The mobile terminal 3 generates server notification information DD based on the settlement identification information DX and settlement user identification information DI. Here, the settlement user identification information DI is information for identifying each customer U among a plurality of customers U. The server notification information DD is information including the settlement identification information DX and the settlement user identification information DI.

As illustrated in FIG. 1, the mobile terminal 3 can communicate with the settlement server 5 via a wired network, a wireless network, or the like such as the Internet NW. As illustrated in FIG. 2, the mobile terminal 3 transmits the server notification information DD generated by the mobile terminal 3 to the settlement server 5.

The settlement server 5 performs a settlement approval process based on the server notification information DC supplied from the receipt server 4 and the server notification information DD supplied from the mobile terminal 3. Here, the settlement approval process is a process of approving the settlement of the purchase price of the product when the customer U purchases the product.

Then, in the settlement approval process, the settlement server 5 supplies approval screen information DGN indicating a settlement approval screen GN to the mobile terminal 3 when approving the settlement made by the customer U. Here, the settlement approval screen GN is a screen for acquiring permission from the customer U for the settlement server 5 to make the settlement of the price of the product purchased by the customer U.

After that, when settlement approval information DN is supplied from the mobile terminal 3, the settlement server 5 performs a settlement process on the product purchased by the customer U. Here, the settlement approval information DN is information indicating that the customer U permits the execution of the settlement of the price of the product purchased by the customer U. Also, the settlement process is a process of making a settlement of the price on the product purchased by the customer U. Specifically, the settlement process is a process of instructing a financial institution that manages the account to add the amount corresponding to the product purchased by the customer U at the store to the balance of the account of the corporation that operates the store.

### 2. Overview of various servers and terminals

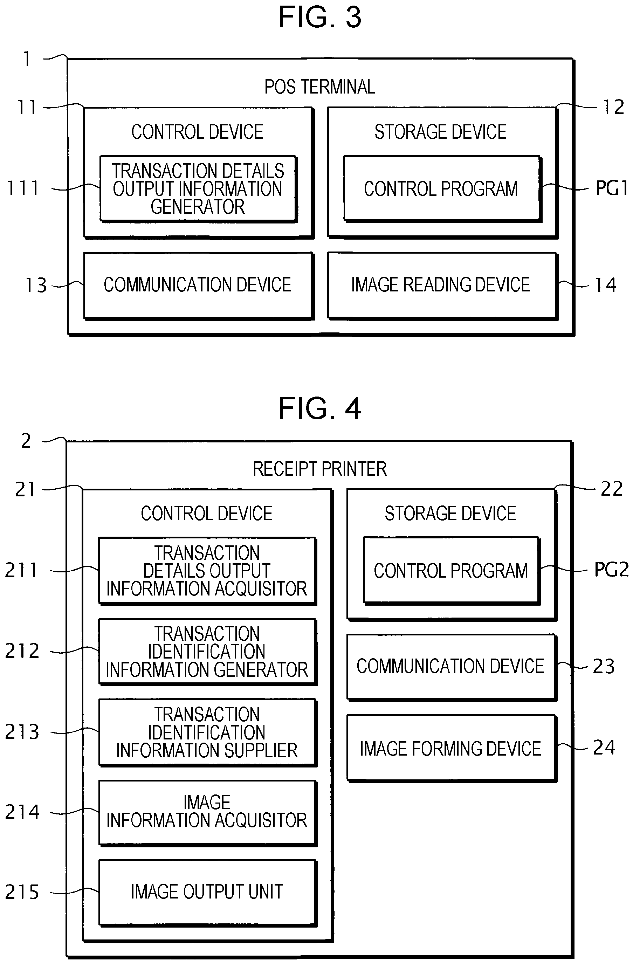

An example of the configurations of various servers and terminals included in the settlement system Sys will be described below with reference to FIGs. 3 to 7.

FIG. 3 is a block diagram showing an example of an overview of the configuration of the POS terminal 1.

As illustrated in FIG. 3, the POS terminal 1 includes a control device 11 that controls each component of the POS terminal 1, a storage device 12 that stores various pieces of information, a communication device 13 that communicate with an external device existing outside the POS terminal 1, and an image reading device 14 that reads information related to the product purchased by the customer U.

The storage device 12 includes, for example, a volatile memory such as a RAM that functions as a work area for the control device 11, and a nonvolatile memory such as an EEPROM that stores various pieces of information such as a control program PG1 of the POS terminal 1. The RAM is an abbreviation for a random access memory. The EEPROM is an abbreviation for an electrically erasable programmable read-only memory.

The control device 11 includes, for example, a processor. The processor provided in the control device 11 includes, for example, one or more CPUs. The processor provided in the control device 11 executes the control program PG1 stored in the storage device 12 and operates according to the control program PG1, thereby controlling each component of the POS terminal 1. Note that the processor provided in the control device 11 may include hardware such as a GPU, a DSP, or an FPGA in addition to one or more CPUs, or in place of part or all of one or more CPUs. Here, the CPU is an abbreviation for a central processing unit. The GPU is an abbreviation for a graphics processing unit. The DSP is an abbreviation for a digital signal processor. The FPGA is an abbreviation for a field programmable gate array.

More specifically, the processor of the control device 11 can execute the control program PG1 and operate according to the control program PG1, thereby functioning as a transaction details output information generator 111. The transaction details output information generator 111 generates the product payment information DH based on information acquired using the image reading device 14. Further, the transaction details output information generator 111 generates the transaction details output information DR based on one or both of the information acquired using the image reading device 14 and the product payment information DH.

The communication device 13 is, for example, hardware that communicates with an external device of the POS terminal 1 such as the receipt printer 2 via a wired network, a wireless network, or the like.

FIG. 4 is a block diagram showing an example of an overview of the configuration of the receipt printer 2.

As illustrated in FIG. 4, the receipt printer 2 includes a control device 21 that controls each component of the receipt printer 2, a storage device 22 that stores various pieces of information, a communication device 23 that communicate with an external device existing outside the receipt printer 2, and an image forming device 24 that prints the receipt R.

The storage device 22 includes, for example, a volatile memory such as a RAM that functions as a work area for the control device 21, and a nonvolatile memory such as an EEPROM that stores various pieces of information such as a control program PG2 for the receipt printer 2.

The control device 21 includes, for example, a processor. The processor provided in the control device 21 includes, for example, one or more CPUs. The processor provided in the control device 21 executes the control program PG2 stored in the storage device 22 and operates according to the control program PG2, thereby controlling each component of the receipt printer 2. Note that the processor provided in the control device 21 may include hardware such as a GPU, a DSP, or an FPGA in addition to one or more CPUs, or in place of part or all of one or more CPUs.

More specifically, the processor of the control device 21 can execute the control program PG2 and operate according to the control program PG2, thereby functioning as a transaction details output information acquisitor 211, a transaction identification information generator 212, a transaction identification information supplier 213, an image information acquisitor 214, and an image output unit 215.

The transaction details output information acquisitor 211 acquires the transaction details output information DR supplied from the POS terminal 1 and stores the acquired the transaction details output information DR in the storage device 22. Note that the transaction details output information acquisitor 211 is an example of an "output information acquisitor". The transaction identification information generator 212 generates the transaction identification information DT based on the transaction details output information DR acquired by the transaction details output information acquisitor 211. It should be noted that the transaction identification information generator 212 is an example of an "identification information generator". The transaction identification information supplier 213 controls the communication device 23 so that the transaction identification information DT generated by the transaction identification information generator 212 is supplied to the receipt server 4. The transaction identification information supplier 213 is an example of an "identification information supplier". The image information acquisitor 214 acquires the barcode image information DG from the receipt server 4 and stores the acquired barcode image information DG in the storage device 22. The image output unit 215 performs a printing process based on the transaction details output information DR acquired by the transaction details output information acquisitor 211 and the barcode image information DG acquired by the image information acquisitor 214. Here, the printing process is a process of controlling the image forming device 24 and causing the image forming device 24 to form an image. In the present embodiment, the image output unit 215 prints the receipt R on which the receipt image GR and the barcode image GB are displayed based on the transaction details output information DR and the barcode image information DG in the printing process.

The communication device 23 is, for example, hardware that communicates with external devices of the receipt printer 2 such as the POS terminal 1 and the receipt server 4 via a wired network, a wireless network, or the like. The image forming device 24 is, for example, hardware that prints a receipt R on recording paper by ejecting ink onto the recording paper. In the present embodiment, it is assumed that the image forming device 24 is a so-called piezo image forming device that drives a piezoelectric element to increase the pressure in the pressure chamber, thereby ejecting ink with which the pressure chamber is filled from a nozzle, but the present disclosure is not limited to such an aspect. For example, the image forming device 24 may be a so-called thermal image forming device that heats a heating element provided in the pressure chamber to generate air bubbles in the pressure chamber to increase the pressure in the pressure chamber, thereby ejecting the ink with which the pressure chamber is filled from the nozzle. Further, in the present embodiment, it is assumed that the image forming device 24 is a so-called ink jet image forming device that ejects ink onto recording paper, but the present disclosure is not limited to such an aspect. The image forming device 24 may be a so-called direct thermal image forming device that has a heating element, and applies heat from the heating element to the recording paper coated with a chemical that develops color when heat is applied, thereby causing the recording paper to develop a color and form an image. Further, the image forming device 24 may be a so-called thermal transfer image forming device that has a heating element, and applies heat to an ink ribbon coated with ink that melts due to heat to transfer the ink applied to the ink ribbon onto the recording paper, thereby forming an image on the recording paper.

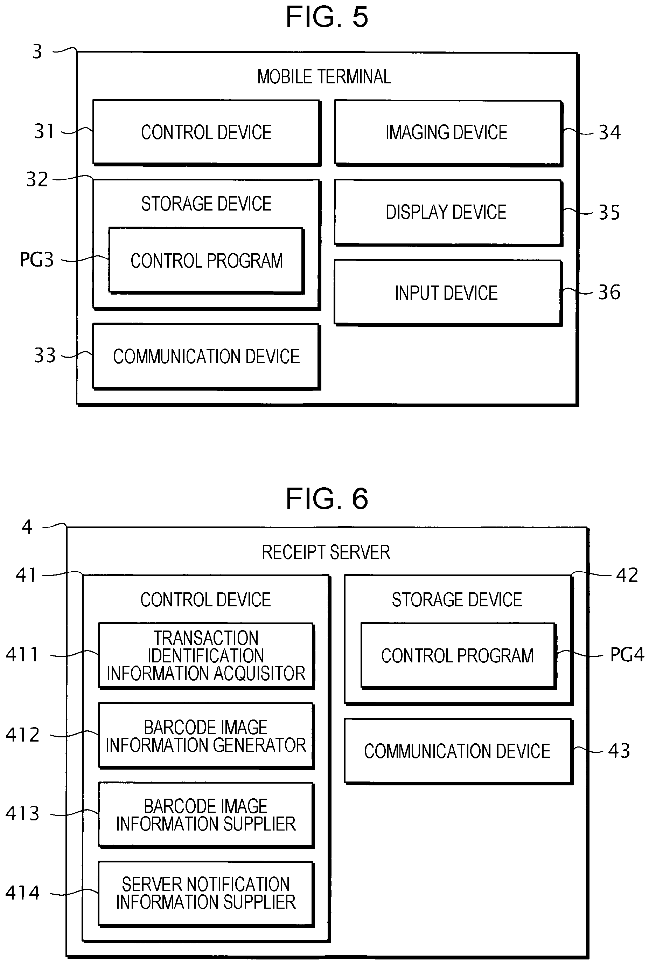

FIG. 5 is a block diagram showing an example of an overview of the configuration of the mobile terminal 3.

As illustrated in FIG. 5, the mobile terminal 3 includes a control device 31 that controls each component of the mobile terminal 3, a storage device 32 that stores various pieces of information, a communication device 33 that communicates with an external device existing outside the mobile terminal 3, an imaging device 34 that captures various images, a display device 35 that displays various pieces of information, and an input device 36 that inputs various pieces of information.

The storage device 32 includes, for example, a volatile memory such as a RAM that functions as a work area for the control device 31, and a nonvolatile memory such as an EEPROM that stores various pieces of information such as a control program PG3 of the mobile terminal 3.

The control device 31 includes, for example, a processor. The processor provided in the control device 31 includes, for example, one or more CPUs. The processor provided in the control device 31 executes the control program PG3 stored in the storage device 22 and operates according to the control program PG3, thereby controlling each component of the mobile terminal 3. Note that the processor provided in the control device 31 may include hardware such as a GPU, a DSP, or an FPGA in addition to one or more CPUs, or in place of part or all of one or more CPUs.

The communication device 33 is, for example, hardware that communicates with an external device of the mobile terminal 3 such as the settlement server 5 via a wired network, a wireless network, or the like. The imaging device 34 is a camera that captures an image such as the barcode image GB displayed on the receipt R, for example. The display device 35 is, for example, a display that displays a screen such as the settlement approval screen GN. The input device 36 is, for example, a touch panel for the customer U who is the owner of the mobile terminal 3 to input various pieces of information to the mobile terminal 3.

FIG. 6 is a block diagram showing an example of an overview of the configuration of the receipt server 4.

As illustrated in FIG. 6, the receipt server 4 includes a control device 41 that controls each component of the receipt server 4, a storage device 42 that stores various pieces of information, and a communication device 43 that communicate with an external device existing outside the receipt server 4.

The storage device 42 includes, for example, a volatile memory such as a RAM that functions as a work area for the control device 41, and a nonvolatile memory such as an EEPROM that stores various pieces of information such as a control program PG4 of the receipt server 4.

The control device 41 includes, for example, a processor. The processor provided in the control device 41 includes, for example, one or more CPUs. The processor provided in the control device 41 executes the control program PG4 stored in the storage device 42 and operates according to the control program PG4, thereby controlling each section of the receipt server 4. Note that the processor provided in the control device 41 may include hardware such as a GPU, a DSP, or an FPGA in addition to one or more CPUs, or in place of part or all of one or more CPUs.

More specifically, the processor of the control device 41 can execute the control program PG4 and operate according to the control program PG4, thereby functioning as a transaction identification information acquisitor 411, a barcode image information generator 412, a barcode image information supplier 413 and a server notification information supplier 414.

The transaction identification information acquisitor 411 acquires the transaction identification information DT supplied from the receipt printer 2 and stores the acquired transaction identification information DT in the storage device 42. It should be noted that the transaction identification information acquisitor 411 is an example of an "identification information acquisitor". The barcode image information generator 412 generates the barcode image information DG based on the transaction identification information DT acquired by the transaction identification information acquisitor 411. Also, the barcode image information generator 412 generates the server notification information DC including the settlement identification information DX based on the transaction identification information DT acquired by the transaction identification information acquisitor 411. The barcode image information generator 412 is an example of an "image information generator". The barcode image information supplier 413 controls the communication device 43 so that the barcode image information DG generated by the barcode image information generator 412 is supplied to the receipt printer 2. Note that the barcode image information supplier 413 is an example of an "image information supplier". The server notification information supplier 414 controls the communication device 43 so that the server notification information DC including the settlement identification information DX generated by the barcode image information generator 412 is supplied to the settlement server 5. Note that the server notification information supplier 414 is an example of an "identification information supplier".

The communication device 43 is, for example, hardware that communicates with external devices of the receipt server 4 such as the receipt printer 2 and the settlement server 5 via a wired network, a wireless network, or the like.

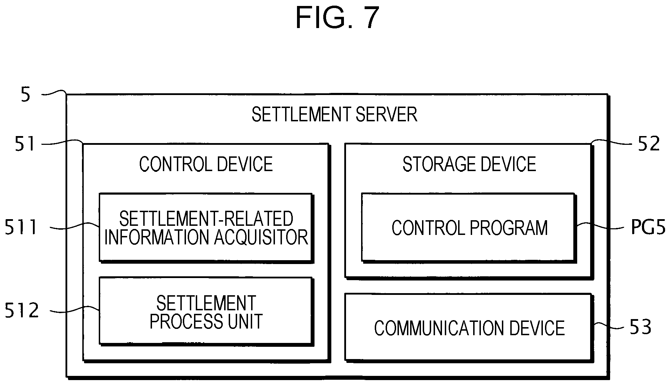

FIG. 7 is a block diagram showing an example of an overview of the configuration of the settlement server 5.

As exemplified in FIG. 7, the settlement server 5 has a control device 51 that controls each component of the settlement server 5, a storage device 52 that stores various kinds of information, and a communication device 53 that communicate with an external device existing outside the settlement server 5.

The storage device 52 includes, for example, a volatile memory such as a RAM that functions as a work area for the control device 51, and a nonvolatile memory such as an EEPROM that stores various pieces of information such as a control program PG5 of the settlement server 5. Although not shown, the storage device 52 stores settlement user information DU. Here, the settlement user information DU is information related to the customer U, such as the upper limit of the settlement that the customer U can make.

The control device 51 includes, for example, a processor. The processor provided in the control device 51 includes, for example, one or more CPUs. The processor provided in the control device 51 executes the control program PG5 stored in the storage device 52 and operates according to the control program PG5, thereby controlling each component of the settlement server 5. Note that the processor provided in the control device 51 may include hardware such as a GPU, a DSP, or an FPGA in addition to one or more CPUs, or in place of part or all of one or more CPUs.

More specifically, the processor of the control device 51 can execute the control program PG5 and operate according to the control program PG5, thereby functioning as a settlement-related information acquisitor 511 and a settlement processing unit 512.

The settlement-related information acquisitor 511 acquires the server notification information DC supplied from the receipt server 4 and stores the acquired server notification information DC in the storage device 52. In addition, the settlement-related information acquisitor 511 acquires the server notification information DD supplied from the mobile terminal 3 and stores the acquired server notification information DD in the storage device 52. The settlement processing unit 512 performs a settlement approval process and a settlement process.

The communication device 53 is, for example, hardware that communicates with external devices of the settlement server 5 such as the mobile terminal 3 and the receipt server 4 via a wired network, a wireless network, or the like.

### 3. Operation of settlement system

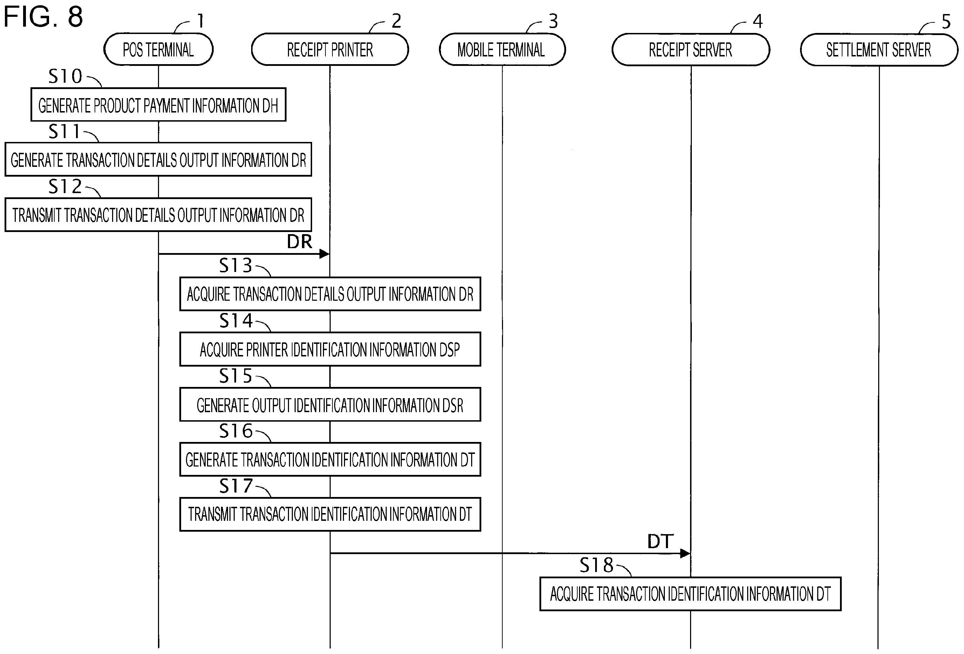

An example of the operation of the settlement system Sys when one customer U purchases a product at a store will be described below with reference to FIGs. 8 to 11. In addition, hereinafter, the process performed by the settlement system Sys when the customer U purchases the product at the store is referred to as a settlement management process.

FIGs. 8 to 11 are sequence charts showing an example of the operation of the settlement system Sys when the settlement system Sys perform a settlement management process related to a settlement made by one customer U.

As illustrated in FIG. 8, when one customer U purchases a product at a store and the settlement management process is started, the transaction details output information generator 111 of the POS terminal 1 generates the product payment information DH based on information acquired using the image reading device 14 (S10). Next, the transaction details output information generator 111 of the POS terminal 1 generates the transaction details output information DR based on the product payment information DH generated in step S10 (S11). Then, the transaction details output information generator 111 of the POS terminal 1 controls the communication device 13 so that the transaction details output information DR generated in step S11 is transmitted to the receipt printer 2 (S12).

After that, the transaction details output information acquisitor 211 of the receipt printer 2 acquires the transaction details output information DR supplied from the POS terminal 1 (S13). Also, the control device 21 of the receipt printer 2 acquires the printer identification information DSP stored in the storage device 22 or the like (S14). Also, the control device 21 of the receipt printer 2 generates the output identification information DSR based on information indicating the date and time or a count value stored in the storage device 22 or the like (S15). Then, the transaction identification information generator 212 of the receipt printer 2 generates the transaction identification information DT based on the transaction details output information DR acquired in step S13, the printer identification information DSP acquired in step S14, and the output identification information DSR generated in step S15 (S16). Next, the transaction identification information supplier 213 of the receipt printer 2 controls the communication device 23 so that the transaction identification information DT generated in step S16 is transmitted to the receipt server 4 (S17).

After that, the transaction identification information acquisitor 411 of the receipt server 4 acquires the transaction identification information DT supplied from the receipt printer 2 (S18).

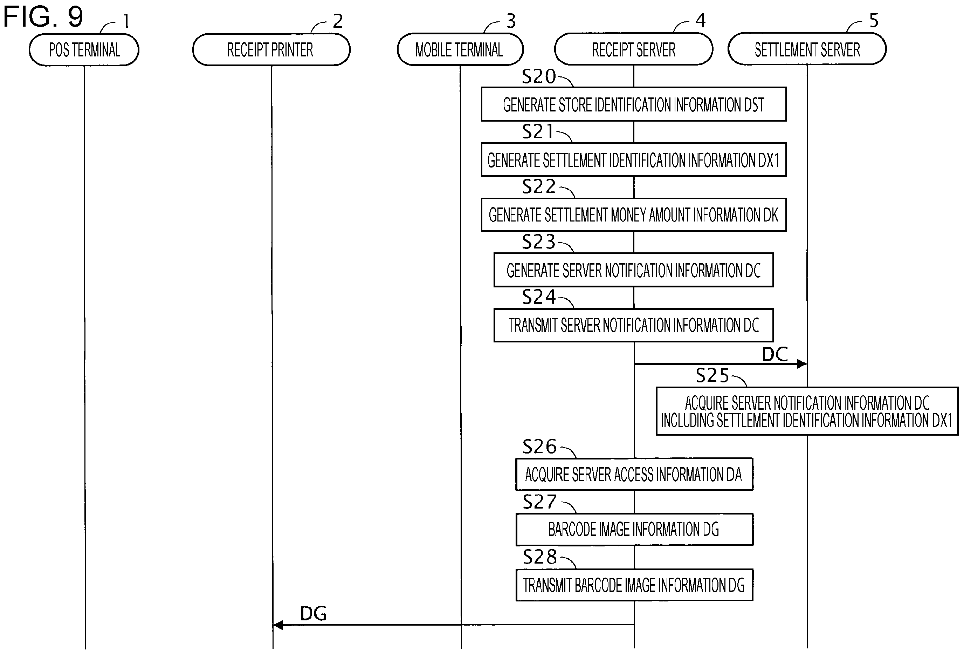

As illustrated in FIG. 9, the barcode image information generator 412 of the receipt server 4 generates the store identification information DST (S20). Specifically, in step S20, the barcode image information generator 412 refers to a table or the like storing the printer identification information DSP corresponding to the receipt printer 2 and information for identifying a store where the receipt printer 2 is installed in association with each other to generate the store identification information DST, which is information for identifying a store in which the receipt printer 2 is installed based on the printer identification information DSP included in the transaction identification information DT acquired by the transaction identification information acquisitor 411 in step S18.

Also, the barcode image information generator 412 of the receipt server 4 generates the settlement identification information DX1 (S21). Specifically, in step S21, the barcode image information generator 412 generates the settlement identification information DX1 based on the output identification information DSR included in the transaction identification information DT that the transaction identification information acquisitor 411 acquired in step S18, the printer identification information DSP included in the transaction identification information DT the transaction identification information acquisitor 411 acquired in step S18, and the store identification information DST generated by the barcode image information generator 412 in step S20.

Also, the barcode image information generator 412 of the receipt server 4 generates the settlement money amount information DK (S22). Specifically, in step S22, the barcode image information generator 412 generates the settlement money amount information DK based on the transaction details output information DR included in the transaction identification information DT that the transaction identification information acquisitor 411 acquired in step S18. More specifically, in step S22, the barcode image information generator 412 may analyze the receipt image GR, displayed on the receipt R, indicated by the transaction details output information DR to grasp character strings indicated by the receipt image GR, and may generate the settlement money amount information DK based on a character string that indicate the amount of settlement made by one customer U among the grasped character strings.

Also, the barcode image information generator 412 of the receipt server 4 generates the server notification information DC (S23). Specifically, in step S23, the barcode image information generator 412 generates the server notification information DC based on the settlement identification information DX1 generated by the barcode image information generator 412 in step S21 and the settlement money amount information DK generated by the barcode image information generator 412 in step S22. Next, the server notification information supplier 414 of the receipt server 4 controls the communication device 43 so that the server notification information DC, including the settlement identification information DX1, generated by the barcode image information generator 412 in step S23 is transmitted to the settlement server 5 (S24).

Thereafter, the settlement-related information acquisitor 511 of the settlement server 5 acquires the server notification information DC, including the settlement identification information DX1, supplied from the receipt server 4 (S25).

Also, the barcode image information generator 412 of the receipt server 4 acquires the server access information DA (S26). Specifically, in step S26, the barcode image information generator 412, for example, may refer to the storage device 42 that stores the URL of the settlement server 5 to acquire the server access information DA indicating the URL of the settlement server 5.

After that, the barcode image information generator 412 of the receipt server 4 generates the barcode image information DG (S27). Specifically, in step S27, the barcode image information generator 412 generates the barcode image information DG indicating the barcode image GB representing the settlement identification information DX1 and the server access information DA based on the settlement identification information DX1 generated in step S21 by the barcode image information generator 412 and the server access information DA generated in step S26 by the barcode image information generator 412. Next, the barcode image information supplier 413 of the receipt server 4 controls the communication device 43 so that the barcode image information DG generated in step S27 is transmitted to the receipt printer 2 (S28).

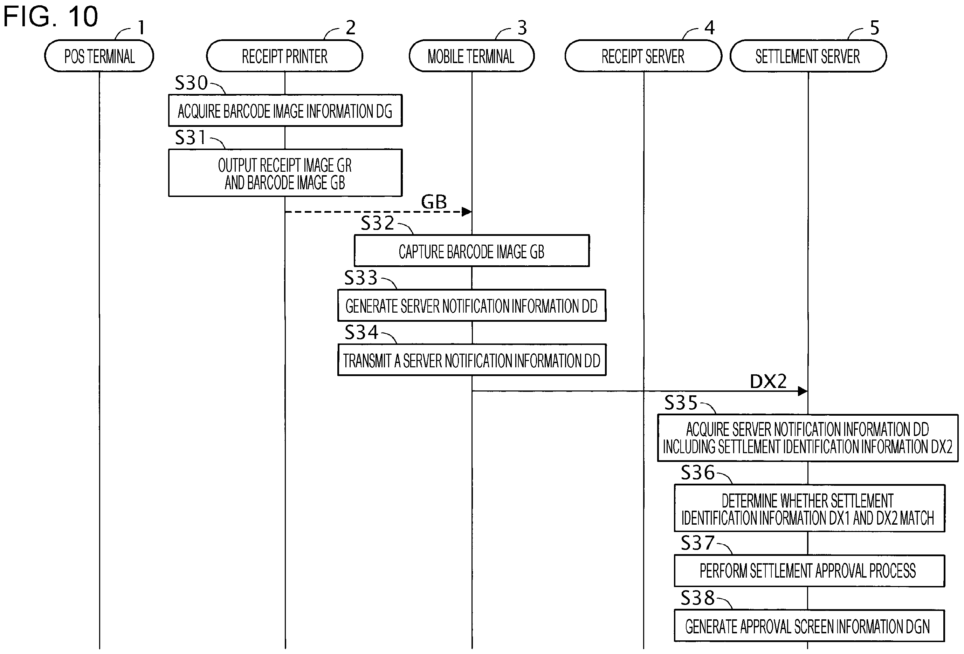

As illustrated in FIG. 10, the image information acquisitor 214 of the receipt printer 2 then acquires the barcode image information DG supplied from the receipt server 4 (S30). Then, the image output unit 215 of the receipt printer 2 outputs the receipt R (S31). Specifically, in step S31, the image output unit 215 controls the image forming device 24 so that the receipt R representing the receipt image GR indicated by the transaction details output information DR and the barcode image GB represented by the barcode image information DG is printed based on the transaction details output information DR acquired by the transaction details output information acquisitor 211 in step S13 and the barcode image information DG acquired by the image information acquisitor 214 in step S30.

After that, the control device 31 of the mobile terminal 3 controls the imaging device 34 so that the barcode image GB represented on the receipt R printed by the receipt printer 2 in step S31 is captured (S32).

Then, the control device 31 of the mobile terminal 3 generates the server notification information DD including the settlement identification information DX2 based on the imaging result in step S32 (S33). Specifically, in step S33, the control device 31 of the mobile terminal 3 generate the server notification information DD including the settlement identification information DX2 acquired by the imaging device 34 as the imaging result in step S32 and the settlement user identification information DI stored in the storage device 32. As described above, in the examples shown in FIGs. 8 to 11, the settlement management process is started when one customer U purchases a product. Therefore, in the examples shown in FIGs. 8 to 11, the barcode image GB captured by the image forming device 24 in step S32 represents the settlement identification information DX1. Therefore, the settlement identification information DX2 included in the server notification information DD generated by the control device 31 in step S33 is the same information as the settlement identification information DX1.

Next, the control device 31 of the mobile terminal 3 controls the communication device 33 so that the server notification information DD generated in step S33 is transmitted to the settlement server 5 (S34).

Then, the settlement-related information acquisitor 511 of the settlement server 5 acquires the server notification information DD including the settlement identification information DX2 supplied from the mobile terminal 3 (S35).

In addition, in the present embodiment, as described above, it is assumed that a plurality of settlements is made by a plurality of customers U purchasing products at one or a plurality of stores. In the present embodiment, it is assumed that the receipt server 4 supplies the settlement server 5 with a plurality of pieces of server notification information DC corresponding to the plurality of settlements. In the present embodiment, it is assumed that the settlement server 5 stores, in the storage device 52, a plurality of pieces of settlement identification information DX corresponding to the plurality of server notification information DC supplied from the receipt server 4.

After that, the settlement processing unit 512 of the settlement server 5 determines whether the settlement identification information DX1 included in the server notification information DC acquired by the settlement-related information acquisitor 511 in step S25 and the settlement identification information DX2 included in the server notification information DD acquired by the settlement-related information acquisitor 511 in step S35 (S36). Specifically, in step S36, the settlement processing unit 512 determines whether, for example, among the plurality of pieces of settlement identification information DX stored in the storage device 52, there is settlement identification information DX that matches the settlement identification information DX2. Then, in step S36, when the settlement identification information DX, among the plurality of pieces of settlement identification information DX stored in the storage device 52, that matches the settlement identification information DX2 exists, the settlement processing unit 512 identifies the settlement identification information DX as the settlement identification information DX1, and determines that the settlement identification information DX1 and the settlement identification information DX2 match. On the other hand, in step S36, when there is no settlement identification information DX that matches the settlement identification information DX2 among the plurality of pieces of settlement identification information DX stored in the storage device 52, the settlement processing unit 512 determines that the settlement identification information DX1 and the settlement identification information DX2 do not match. Note that, when the result of the determination in step S36 is affirmative, the settlement processing unit 512 advances the process to step S37. On the other hand, when the result of determination in step S36 is negative, the settlement processing unit 512 rejects the settlement made by the one customer U.

Note that, as described above, the settlement identification information DX1 is the settlement identification information DX generated by the receipt server 4 corresponding to the settlement made by one customer U. Further, as described above, the settlement identification information DX2 is the settlement identification information DX acquired from the barcode image GB generated based on the settlement identification information DX generated by the receipt server 4 corresponding to the settlement made by one customer U. Therefore, when the settlement identification information DX supplied from the mobile terminal 3 is the settlement identification information DX acquired as a result of imaging the barcode image GB, the settlement identification information DX1 and the settlement identification information DX2 match.

Thereafter, the settlement processing unit 512 of the settlement server 5 performs a settlement approval process (S37). Specifically, in the settlement approval process in step S37, the settlement processing unit 512 first identifies the settlement user information DU corresponding to one customer U from among the settlement user information DU stored in the storage device 52 based on the settlement user identification information DI included in the server notification information DD acquired by the settlement-related information acquisitor 511 in step S35. Then, in the settlement approval process in step S37, the settlement processing unit 512 second determines based on the settlement user information DU corresponding to the one customer U that the settlement money amount information DK corresponding to the settlement made by the one customer U is equal to or less than the upper limit amount of the settlement made by one customer U. When the result of determination of the settlement approval process in step S37 is negative, the settlement processing unit 512 rejects the settlement made by one customer U.

Then, when the result of determination of the settlement approval process of the step S37 is affirmed, the control device 51 of the settlement server 5 generates the approval screen information DGN (S38).

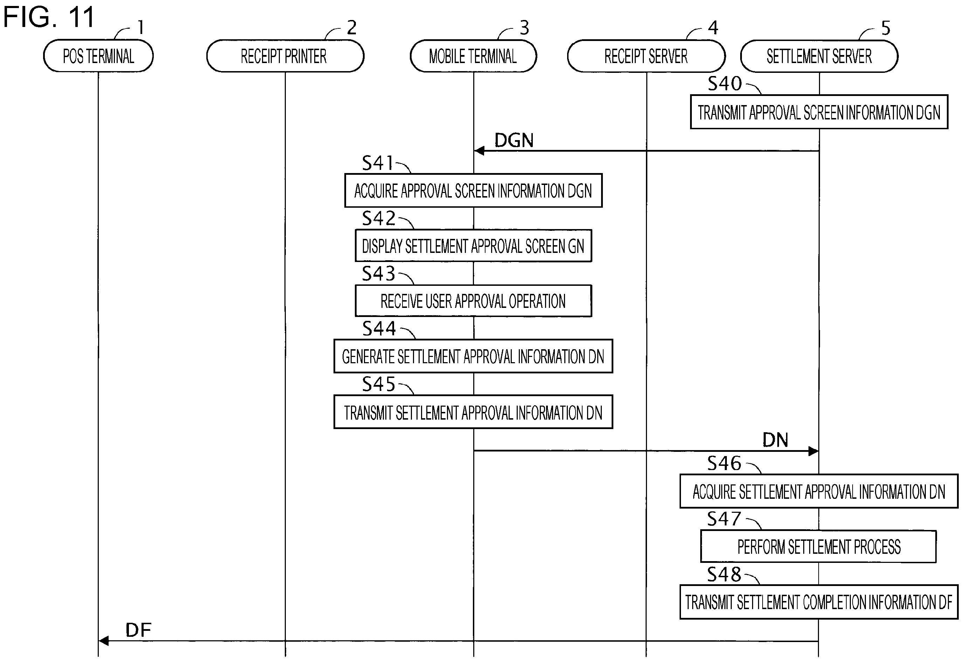

As illustrated in FIG. 11, the control device 51 of the settlement server 5 controls the communication device 53 so that the approval screen information DGN generated in step S38 is transmitted to the mobile terminal 3 (S40).

After that, the control device 31 of the mobile terminal 3 acquires the approval screen information DGN supplied from the settlement server 5 (S41). Then, the control device 31 of the mobile terminal 3 controls the display device 35 so that the settlement approval screen GN is displayed in the display device 35 based on the approval screen information DGN acquired by the control device 31 in step S41 (S42). Next, the control device 31 of the mobile terminal 3 receives a settlement approval operation, from the input device 36, which is an operation that one customer U approves the settlement (S43). Then, when the control device 31 of the mobile terminal 3 receives the settlement approval operation in step S43, the control device 31 generates the settlement approval information DN (S44). After that, the control device 31 of the mobile terminal 3 controls the communication device 33 so that the settlement approval information DN generated in step S44 is transmitted to the settlement server 5 (S45).

Next, the control device 51 of the settlement server 5 then acquires the settlement approval information DN supplied from the mobile terminal 3 (S46). Then, the control device 51 of the settlement server 5 performs a settlement process related to the purchase of the product by the one customer U (S47). After that, the control device 51 of the settlement server 5 controls the communication device 53 so that settlement completion information DF indicating the result of the settlement process in step S47 is transmitted to the POS terminal 1 (S48).

### 4. Conclusion of embodiment

In the related art, the settlement server 5 has performed a settlement approval process using fixed information such as a barcode installed in the store with the barcode printed on a paper medium or the like. In this case, there is a possibility that fixed information used for the settlement is falsified, such as replacing a barcode corresponding to one store with a barcode corresponding to another store. Therefore, in the technology in the related art, there is a possibility that the inappropriate settlements may be made due to falsification of fixed information used for a settlement.

On the other hand, the control program PG2 according to the present embodiment causes the processor of the receipt printer 2 to function as the transaction details output information acquisitor 211 that acquires the transaction details output information DR for outputting the receipt image GR related to a settlement, the transaction identification information generator 212 that generates the transaction identification information DT including the output identification information DSR for identifying transaction details output information DR, the transaction identification information supplier 213 that supplies the transaction identification information DT to the receipt server 4 that generates the settlement identification information DX1 based on the output identification information DSR and generates the barcode image information DG indicating the barcode image GB representing the settlement identification information DX1 when the transaction identification information DT is supplied, the image information acquisitor 214 that acquires the barcode image information DG from the receipt server 4, and the image output unit 215 that outputs the barcode image GB based on the barcode image information DG so that the mobile terminal 3 that captures the barcode image GB and generates the server notification information DD including the settlement identification information DX2 based on the result of the captured barcode image is configured to capture the barcode image GB, where the mobile terminal 3 supplies the settlement identification information DX2 to the settlement server 5 that makes the settlement when the settlement identification information DX2 is supplied and when the settlement identification information DX1 and the settlement identification information DX2 match.

As described above, according to the present embodiment, the settlement is made using the result of the image captured by the mobile terminal 3 with respect to the settlement identification information DX1 generated based on the output identification information DSR for identifying the transaction details output information DR related to the settlement. In other words, according to the present embodiment, the settlement is made using the settlement identification information DX1, which is information dynamically generated for each settlement. A possibility that the settlement identification information DX1 according to the present embodiment is falsified is smaller than a possibility that fixed information such as a barcode according to the technology in the related art is replaced and falsified. For this reason, according to the present embodiment, it is possible to reduce the possibility that information used for the settlement is falsified, compared to an embodiment in the related art in which the settlement is made using fixed information such as a barcode installed in the store before the settlement is made. As a result, according to the present embodiment, it is possible to reduce the possibility that an inappropriate settlement due to falsification of the settlement identification information DX1 used for the settlement is made, as compared with an embodiment in the technology in the related art.

In addition, in the present embodiment, the transaction identification information generator 212 may generate printer identification information DSP for identifying the receipt printer 2 and include the printer identification information DSP in the transaction identification information DT.

For this reason, according to the present embodiment, for example, when settlements are available at a plurality of stores, it is possible to identify each store where the settlement was made by installing a different receipt printer 2 for each store. Also, when the settlement is made at a plurality of stores and a plurality of pieces of output identification information DSR is supplied from the plurality of receipt printers 2 corresponding to the plurality of stores, each output identification information DSR can be identified reliably.

Further, in the present embodiment, the image output unit 215 may output an image including the barcode image GB and including the receipt image GR based on the transaction details output information DR and the barcode image information DG.

That is, according to the present embodiment, it is possible to display the barcode image GB necessary for making a settlement on the receipt R on which the receipt image GR output by the image output unit 215 is displayed. Therefore, according to the present embodiment, it is possible to reduce the burden on the customer U who makes the settlement and the store clerk involved in the settlement, compared to an embodiment in which the barcode image GB is printed separately from the receipt image GR.

Further, the control program PG2 according to the present embodiment causes the processor of the receipt printer 2 to function as the transaction details output information acquisitor 211 that acquires the transaction details output information DR for outputting the receipt image GR related to a settlement, the transaction identification information generator 212 that generates the transaction identification information DT including the output identification information DSR for identifying the transaction details output information DR, the printer identification information DSP for identifying the receipt printer 2, and the transaction details output information DR, the transaction identification information supplier 213 that supplies the transaction identification information DT to the receipt server 4 that generates the settlement identification information DX1 based on the output identification information DSR and the printer identification information DSP, generates the settlement money amount information DK indicating the settlement amount related to the settlement based on the transaction details output information DR, and generates the barcode image information DG indicating the barcode image GB representing the settlement identification information DX1 when the transaction identification information DT is supplied, the image information acquisitor 214 that acquires the barcode image information DG from the receipt server 4, and the image output unit 215 that outputs the barcode image GB based on barcode image information DG so that the mobile terminal 3 that captures the barcode image GB and generates the server notification information DD including the settlement identification information DX2 based on the result of the captured barcode image is configured to capture the barcode image GB, where the mobile terminal 3 supplies the settlement identification information DX2 to the settlement server 5 that makes the settlement based on settlement money amount information DK when the settlement identification information DX1 and the settlement identification information DX2 and the settlement money amount information DK are supplied and when the settlement identification information DX1 and the settlement identification information DX2 match.

Therefore, according to the present embodiment, the settlement is made using the result of the image captured by the mobile terminal 3 with respect to the settlement identification information DX1 generated based on the output identification information DSR for identifying the transaction details output information DR related to the settlement. For this reason, according to the present embodiment, it is possible to reduce the possibility that information used for the settlement is falsified, compared to an embodiment in the related art in which the settlement is made using fixed information such as a barcode installed in the store before the settlement is made.

Further, according to the present embodiment, the settlement is made based on settlement money amount information DK generated from transaction details output information DR. For this reason, according to the present embodiment, it is possible to reduce the possibility that an inappropriate settlement due to an input error of the settlement amount related to the settlement is made, compared to, for example, an embodiment in which the customer U inputs the settlement amount related to the settlement into the mobile terminal 3. Further, according to the present embodiment, it is possible to reduce a burden on the customer U who inputs the settlement amount related to the settlement into the mobile terminal 3, compared to, for example, an embodiment in which the customer U inputs the settlement amount related to the settlement into the mobile terminal 3.

Further, the control program PG4 according to the present embodiment causes the processor of the receipt server 4 to function as the transaction identification information acquisitor 411 that acquires the transaction identification information DT from the receipt printer 2 that acquires the transaction details output information DR for outputting the receipt image GR related to the settlement and generates the transaction identification information DT including the output identification information DSR for identifying the transaction details output information DR, the barcode image information generator 412 that generates the settlement identification information DX1 based on the output identification information DSR and generates the barcode image information DG indicating the barcode image GB representing the settlement identification information DX1, the barcode image information supplier 413 that supplies the barcode image information DG to the receipt printer 2, and the server notification information supplier 414 that supplies the settlement identification information DX1 to the settlement server 5 that makes the settlement when the settlement identification information DX2 is supplied from the mobile terminal 3 that captures the barcode image GB output by the receipt printer 2 based on the barcode image information DG and generates the server notification information DD including the settlement identification information DX2 based on the result of the captured barcode image imaging, and when the settlement identification information DX1 and the settlement identification information DX2 match.

Therefore, according to the present embodiment, the settlement is made using the result of the image captured by the mobile terminal 3 with respect to the settlement identification information DX1 generated based on the output identification information DSR for identifying the transaction details output information DR related to the settlement. For this reason, according to the present embodiment, it is possible to reduce the possibility that information used for the settlement is falsified, compared to an embodiment in the related art in which the settlement is made using fixed information such as a barcode installed in the store before the settlement is made.

Further, in the present embodiment, the transaction identification information DT may include the transaction details output information DR, the barcode image information generator 412 may generate the settlement money amount information DK indicating the settlement amount related to the settlement based on the transaction details output information DR, and generate the server notification information DC including the settlement money amount information DK and settlement identification information DX1, and the settlement server 5 may make the settlement based on the settlement money amount information DK when the settlement identification information DX1 and the settlement money amount information DK are supplied from the receipt server 4 and when the settlement identification information DX1 and the settlement identification information DX2 match.

Therefore, according to the present embodiment, the settlement is made based on the settlement money amount information DK generated from the transaction details output information DR in the receipt server 4. For this reason, it is possible to reduce the possibility that an inappropriate settlement due to an input error of the settlement amount related to the settlement is made, compared to, for example, an embodiment in which the customer U inputs the settlement amount related to the settlement into the mobile terminal 3.

### B. Modifications

Each of the above forms can be variously modified. Specific modification modes are exemplified below. Two or more modes optionally selected from the following exemplifications can be appropriately merged within a range not inconsistent with each other. In the modifications illustrated below, elements having the same actions and functions as those of the embodiments will be denoted by the reference numerals used in the above description, and detailed description thereof will be appropriately omitted.

### First modification

In the above-described embodiment, the embodiment in which the receipt printer 2 simultaneously prints the barcode image GB and the receipt image GR as the receipt R is described, but the present disclosure is not limited to such an embodiment. The receipt printer 2 may output the barcode image GB before performing the settlement process, and output the receipt image GR after performing the settlement process.

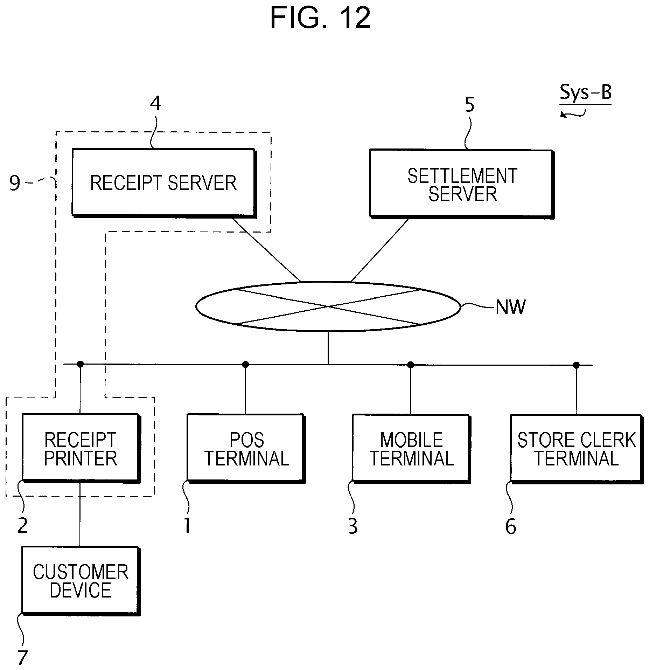

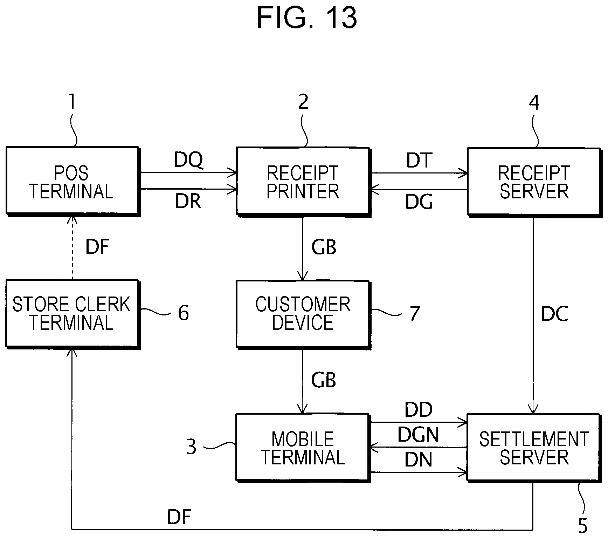

FIG. 12 is a block diagram showing an example of the configuration of a settlement system Sys-B according to this modification. FIG. 13 is a diagram showing an example of information transmitted and received inside the settlement system Sys-B.

As illustrated in FIG. 12, the settlement system Sys-B is different from the settlement system Sys according to the present embodiment in that it includes a store clerk terminal 6 and a customer display device 7. The store clerk terminal 6 includes a display that displays a screen for the store clerk of the store where the customer U purchases a product to visually recognize. The customer display device 7 has a display that displays the screen for the customer U to visually recognize.

As illustrated in FIG. 13, this modification is different from the above-described embodiment in that the POS terminal 1 outputs transaction money amount output information DQ in addition to the transaction details output information DR. Here, the transaction money amount output information DQ is information indicating the settlement amount when the customer U purchases the product. Further, this modification is different from the above-described embodiment in that the receipt printer 2 includes the transaction money amount output information DQ instead of the transaction details output information DR in the transaction identification information DT. Also, this modification is different from the above-described embodiment in that the receipt printer 2 generates the settlement money amount information DK based on the transaction money amount output information DQ. Further, this modification is different from the above-described embodiment in that the mobile terminal 3 displays the barcode image GB on the customer display device 7. Further, this modification is different from the above-described embodiment in that the mobile terminal 3 captures the barcode image GB displayed on the customer display device 7. Moreover, this modification is different from the above-described embodiment in that the settlement server 5 supplies the settlement completion information DF to the store clerk terminal 6.

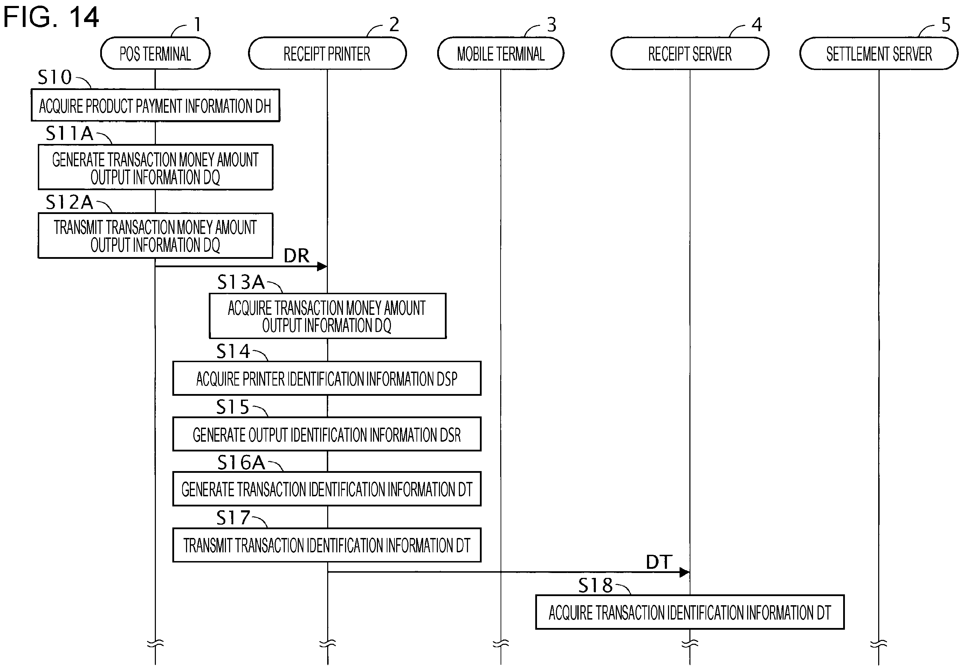

FIGs. 14 to 16 are sequence charts showing an example of the operation of the settlement system Sys-B when the settlement system Sys-B performs a settlement management process related to a settlement made by one customer U.

As illustrated in FIG. 14, when one customer U purchases a product at a store and the settlement management process is started, the transaction details output information generator 111 of the POS terminal 1 generates the product payment information DH (S10). Next, the transaction details output information generator 111 of the POS terminal 1 generates the transaction money amount output information DQ based on the product payment information DH generated in step S10 (S11A). Then, the transaction details output information generator 111 of the POS terminal 1 controls the communication device 13 so that the transaction money amount output information DQ generated in step S11A is transmitted to the receipt printer 2 (S12A).

After that, the transaction details output information acquisitor 211 of the receipt printer 2 acquires the transaction money amount output information DQ supplied from the POS terminal 1 (S13A). Then, the control device 21 of the receipt printer 2 performs the process of steps S14 and S15 described above. Next, the transaction identification information generator 212 of the receipt printer 2 generates the transaction identification information DT based on the transaction money amount output information DQ acquired in step S13A, the printer identification information DSP acquired in step S14, and the output identification information DSR generated in step S15 (S16A). After that, the settlement system Sys-B performs the process of steps S17 to S27 described above. In this modification, in step S22, the settlement system Sys-B generates the settlement money amount information DK based on the transaction money amount output information DQ.

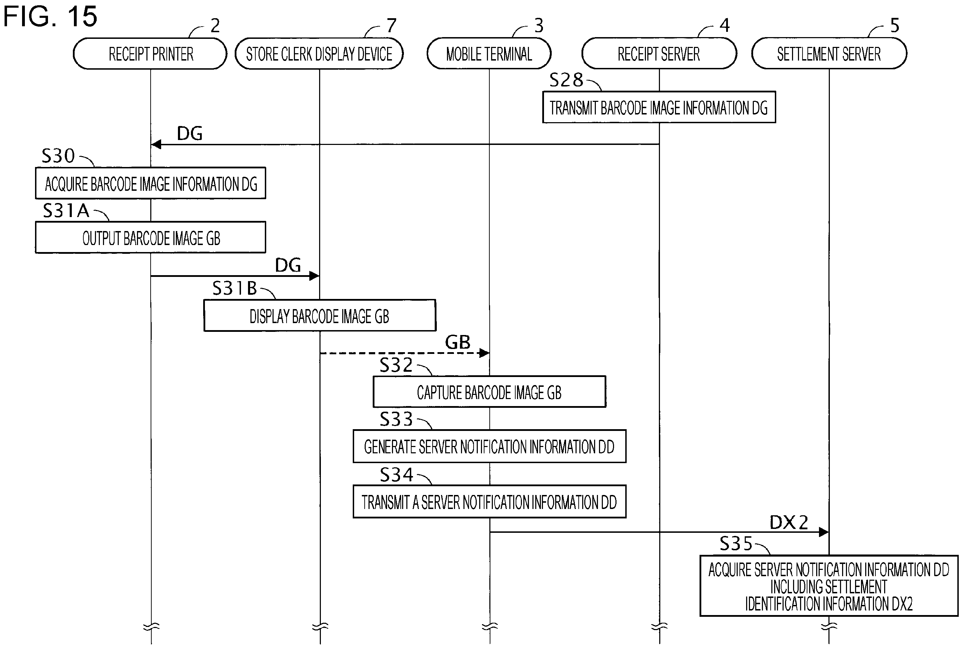

As illustrated in FIG. 15, the barcode image information supplier 413 of the receipt server 4 controls the communication device 43 so that the barcode image information DG is transmitted to the receipt printer 2 (S28). Then, the image information acquisitor 214 of the receipt printer 2 acquires the barcode image information DG supplied from the receipt server 4 (S30). After that, the image output unit 215 of the receipt printer 2 outputs the barcode image GB to the customer display device 7 (S31A). As a result, the barcode image information DG is displayed on the customer display device 7 (S31B). After that, the settlement system Sys-B performs the process of steps S32 to S46 described above.

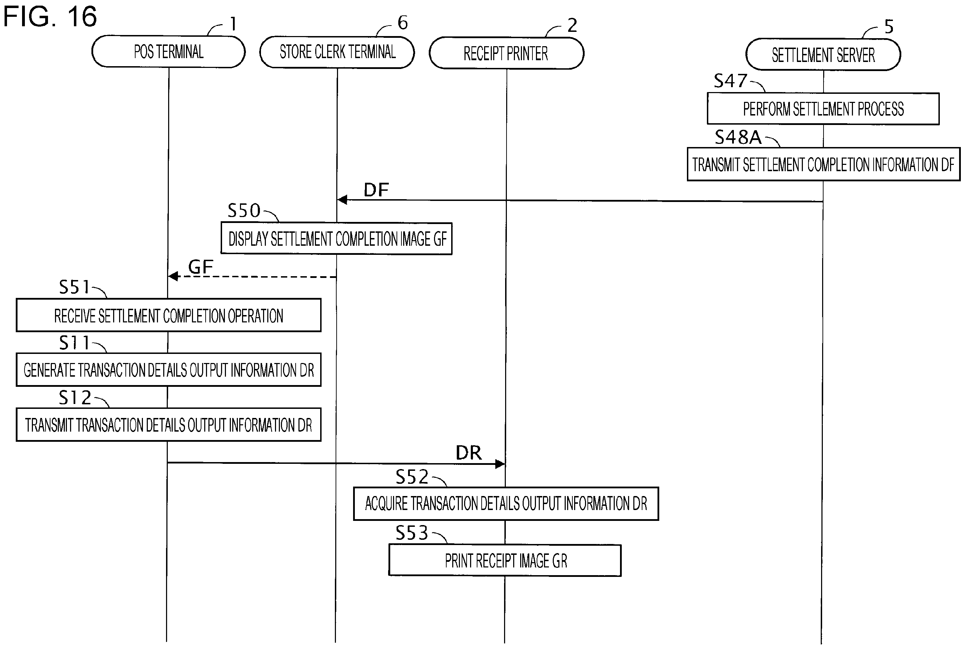

As illustrated in FIG. 16, the control device 51 of the settlement server 5 performs the settlement process related to the purchase of the product by one customer U (S47). After that, the control device 51 of the settlement server 5 controls the communication device 53 so that the settlement completion information DF indicating the result of the settlement process in step S47 is transmitted to the store clerk terminal 6 (S48A). Then, the store clerk terminal 6 displays a settlement completion image GF based on the settlement completion information DF supplied from the settlement server 5 (S50). Here, the settlement completion image GF is an image indicating that the settlement process has been completed. Next, the store clerk of the store where one customer U purchased the product visually checks the settlement completion image GF displayed on the store clerk terminal 6, and performs the settlement completion operation, on the POS terminal 1, which is an operation that the settlement process has been completed. The control device 11 of the POS terminal 1 receives the settlement completion operation performed by the store clerk (S51). After that, the transaction details output information generator 111 of the POS terminal 1 generates the transaction details output information DR based on the product payment information DH generated in step S10 (S11). Then, the transaction details output information generator 111 of the POS terminal 1 controls the communication device 13 so that the transaction details output information DR generated in step S11 is transmitted to the receipt printer 2 (S12).

Thereafter, the transaction details output information acquisitor 211 of the receipt printer 2 acquires the transaction details output information DR supplied from the POS terminal 1 (S52). Then, the image output unit 215 of the receipt printer 2 controls the image forming device 24 so that the receipt R representing the transaction details output information DR is printed based on the transaction details output information DR acquired by the transaction details output information acquisitor 211 in step S52 (S53).

As described above, in this modification, the image output unit 215 outputs the receipt image GR based on the transaction details output information DR after the barcode image GB is output based on the barcode image information DG, and after the settlement server 5 performs the settlement process.

Therefore, according to this modification, the customer U receives the receipt R after the settlement process is completed. Therefore, for example, when there is a change in the details of the settlement, it is possible to prevent a plurality of receipts R from being output. Second modification

Although the settlement system Sys and the settlement system Sys-B include the receipt printer 2 and the receipt server 4 in the above-described embodiment and first modification, respectively, the present disclosure is not limited to such an aspect. For example, the functions of the receipt server 4 may be implemented by the receipt printer 2. Specifically, the functions of the transaction identification information acquisitor 411, the barcode image information generator 412, the barcode image information supplier 413, and the server notification information supplier 414 may be implemented by the receipt printer 2.

### Third modification

Although the settlement system Sys and the settlement system Sys-B include the receipt server 4 and the settlement server 5 in the above-described embodiment and first modification, respectively, the present disclosure is not limited to such an aspect. For example, the functions of the receipt server 4 may be implemented by the settlement server 5. Specifically, the functions of the transaction identification information acquisitor 411, the barcode image information generator 412, the barcode image information supplier 413, and the server notification information supplier 414 may be implemented by the settlement server 5.

## Claims

1. A non-transitory computer-readable storage medium storing a program, the program causing a processor of a printing device to function as:
an output information acquisitor that acquires output information for outputting information related to a settlement;
an identification information generator that generates identification information including output identification information for identifying the output information;
an identification information supplier that supplies the identification information to an information processing device that
generates first identification information based on the output identification information and
generates image information indicating a feature image representing the first identification information
when the identification information is supplied;
an image information acquisitor that acquires the image information from the information processing device; and
an image output unit that outputs the feature image based on the image information
so that a terminal device that captures the feature image and generates information including second identification information based on a result of the captured feature image is configured to capture the feature image,
the terminal device supplying the second identification information to a server device that makes the settlement when the second identification information is supplied and when the first identification information and the second identification information match.

2. The non-transitory computer-readable storage medium storing the program according to claim 1, wherein
the identification information generator generates device identification information for identifying the printing device, and
causes the identification information to include the device identification information.

3. The non-transitory computer-readable storage medium storing the program according to claim 1, wherein
the image output unit outputs an image representing information related to the settlement based on the output information
after outputting the feature image based on the image information and
after the server device makes the settlement.

4. The non-transitory computer-readable storage medium storing the program according to claim 1, wherein
the image output unit
outputs an image including the feature image, the image representing information related to the settlement, based on the output information and the image information.

5. A non-transitory computer-readable storage medium storing a program, the program causing a processor of a printing device to function as:
an output information acquisitor that acquires output information for outputting information related to a settlement;
an identification information generator that generates identification information including output identification information for identifying the output information, device identification information for identifying the printing device, and the output information;
an identification information supplier that supplies the identification information to an information processing device that
generates first identification information based on the output identification information and the device identification information,
generates money amount information indicating a settlement amount related to the settlement based on the output information, and
generates image information indicating a feature image representing the first identification information
when the identification information is supplied;
an image information acquisitor that acquires the image information from the information processing device; and
an image output unit that outputs the feature image based on the image information
so that a terminal device that captures the feature image and generates information including second identification information based on a result of the capture feature image is configured to capture the feature image,
the terminal device supplying the second identification information to a server device that makes the settlement based on the money amount information when the first identification information, the money amount information, and the second identification information are supplied and when the first identification information and the second identification information match.

6. A non-transitory computer-readable storage medium storing a program, the program causing a processor of an information processing device to function as:
an identification information acquisitor that acquires the identification information from a printing device that acquires output information for outputting information related to a settlement,
the printing device generating identification information including output identification information for identifying the output information;
an image information generator that generates first identification information based on the output identification information and generates image information indicating a feature image representing the first identification information;
an image information supplier that supplies the image information to the printing device; and
an identification information supplier that supplies the first identification information
to a server device that makes the settlement when the second identification information is supplied from a terminal device that captures the feature image output by the printing device based on the image information and generates information including second identification information based on a result of the captured feature image and when the first identification information and the second identification information match.

7. The non-transitory computer-readable storage medium storing the program according to claim 6, wherein
the identification information
includes the output information, wherein
the image information generator
generates money amount information indicating a settlement amount related to the settlement based on the output information, and
generates notification information including the money amount information and the first identification information, and wherein
the server device makes the settlement based on the money amount information
when the first identification information and the money amount information are supplied from the information processing device, and when the first identification information and the second identification information match.

8. A printing device comprising:
an output information acquisitor that acquires output information for outputting information related to a settlement;
an identification information generator that generates identification information including output identification information for identifying the output information;
an identification information supplier that supplies the identification information to an information processing device that
generates first identification information based on the output identification information and
generates image information indicating a feature image representing the first identification information
when the identification information is supplied;
an image information acquisitor that acquires the image information from the information processing device; and
an image output unit that outputs the feature image based on the image information
so that a terminal device that captures the feature image and generates information including second identification information based on a result of the captured feature image is configured to capture the feature image,
the terminal device supplying the second identification information to a server device that makes the settlement when the second identification information is supplied and when the first identification information and the second identification information match.

9. An information processing device comprising:
an identification information acquisitor that acquires the identification information from a printing device that acquires output information for outputting information related to a settlement,
the printing device generating identification information including output identification information for identifying the output information;
an image information generator that
generates first identification information based on the output identification information and
generates image information indicating a feature image representing the first identification information;
an image information supplier that supplies the image information to the printing device; and
an identification information supplier that supplies the first identification information
to a server device that makes the settlement when the second identification information is supplied from a terminal device that captures the feature image output by the printing device based on the image information and generates information including second identification information based on a result of the captured feature image and when the first identification information and the second identification information match.

10. A processing method comprising:
acquiring output information for outputting information related to a settlement;
generating identification information including output identification information for identifying the output information;
supplying the identification information
to an information processing device that
generates first identification information based on the output identification information and
generates image information indicating a feature image representing the first identification information
when the identification information is supplied;
acquiring the image information from the information processing device; and
outputting the feature image based on the image information
so that a terminal device that captures the feature image and generates information including second identification information based on a result of the captured feature image is configured to capture the feature image,
the terminal device supplying the second identification information to a server device that makes the settlement when the second identification information is supplied and when the first identification information and the second identification information match.

11. A processing method comprising:
acquiring the identification information from a printing device that acquires output information for outputting information related to a settlement, the printing device generating identification information including output identification information for identifying the output information;
generating first identification information based on the output identification information and
generating image information indicating a feature image representing the first identification information;
supplying the image information to the printing device; and
supplying the first identification information
to a server device that makes the settlement when the second identification information is supplied from a terminal device that captures the feature image output by the printing device based on the image information and generates information including second identification information based on a result of the captured feature image and when the first identification information and the second identification information match.

12. An information processing system comprising:
a printing device; and an information processing device, wherein
the printing device includes
an output information acquisitor that acquires output information for outputting information related to a settlement,
an identification information generator that generates identification information including output identification information for identifying the output information,
an identification information supplier that supplies the identification information to the information processing device, and
an image output unit that outputs a feature image representing the image information based on image information supplied from the information processing device, and wherein
the information processing device includes
an identification information acquisitor that acquires the identification information from the printing device,
an image information generator that
generates first identification information based on the output identification information and
generates image information indicating a feature image representing the first identification information,
an image information supplier that supplies the image information to the printing device, and
an identification information supplier that supplies the first identification information
to a server device that makes the settlement when the second identification information is supplied from a terminal device that captures the feature image output by the printing device based on the image information and generates information including second identification information based on a result of the captured feature image and when the first identification information and the second identification information match.
